# EUROPÄISCHE PATENTANMELDUNG

(11) **EP 1 122 637 A2**
(43) Veröffentlichungstag der Anmeldung: **08.08.2001**
(21) Anmeldenummer: 01100954.5
(22) Anmeldetag: 17.01.2001
(51) Int. Cl.: G06F 7/544

(54) **Recheneinheit für eingeschränkte Signalverarbeitung**

(30) Priorität: 31.01.2000 DE 10004012; 29.02.2000 DE 10009451
(71) Anmelder: Micronas GmbH, 79108 Freiburg (DE)
(72) Erfinder: Noeske, Carsten, Dipl.-Ing., 79286 Glottertal (DE)
(74) Vertreter: Sauer, Wolfgang, Dipl.-Ing.

(57) **Zusammenfassung**

Recheneinheit für eine erste (z) und zweite (k, k*) kodierte Zahl mit mindestens einer Stellenschiebeeinrichtung (3, 4), deren Schiebeposition mittels einer zugehörigen Schiebeinstruktion (s1, s2) in Abhängigkeit von der zweiten Zahl (k, k*) gesteuert ist und deren Stelleneingängen die nach Wertigkeiten geordneten Stellen der ersten Zahl (z) zugeführt sind. Jeder Stellenschiebeeinrichtung (s1, s2) ist ein Vorzeicheninverter (5, 6) zugeordnet, dessen jeweiliger Zustand in Abhängigkeit von der zweiten Zahl (k, k*) mittels einer zugehörigen Vorzeicheninstruktion (n1, n2) gesteuert ist und jede Stelle der Stellenschiebeeinrichtung (3, 4) ist ausgangsseitig mit je einem vielstelligen Addierer (7) verbunden.

## Beschreibung

Die Erfindung betrifft eine Recheneinheit für eine programmierbare Logikeinheit, die im folgenden als Prozessor oder Mikrocontroller bezeichnet wird. Die Recheneinheit erlaubt dem programmierbaren Rechenkern mit relativ geringem zusätzlichen Hardware-Aufwand neben den eigentlichen Steuerungsaufgaben auch digitale Signalverarbeitung zu betreiben, obgleich der Prozessor im wesentlichen für Steuerungsaufgaben ausgelegt ist. In der digitalen Signalverarbeitung werden häufig Multiplikationen mit anschliessender Akkumulierung vorausgehender Ergebnisse benötigt, beispielsweise bei der Realisierung unterschiedlichster digitaler Filter, bei denen digitalisierte Signalwerte verändert oder aus digitalisierten Signalwerten eine Signaleigenschaft herausgefiltert werden soll. Derartige digitale Filterstrukturen sind ausreichend bekannt. Die digitalisierten Signalwerte aufeinanderfolgender Abtastzeitpunkte werden dabei mit unterschiedlichen Zahlenwerten multipliziert und die einzelnen Produkte summiert. Die resultierende Summe wird entweder weiterverarbeitet oder stellt schon einen aktuellen Filtererausgangswert dar. Die unterschiedlichen Zahlenwerte mit denen die digitalisierten Signalwerte multipliziert werden entsprechen Koeffizienten, die durch die jeweiligen Filtereigenschaften vorgegeben sind. Damit die Filter auch bei hohen Signalfrequenzen im Echtzeitbetrieb arbeiten können, muß für die üblichen Signalmultiplizierer entweder eine noch erheblich höhere Taktfrequenz gewählt werden oder eine zeitlich gestaffelte Parallelverarbeitung (= Pipeline-Verfahren) oder bei einer noch weitergehenden Parallelverarbeitung ein hoher Hardwareaufwand, der in der Lage ist, eine echte Mulitiplikation innerhalb weniger Taktzyklen oder gar innerhalb einer einzigen Taktperiode auszuführen.

Es ist daher Aufgabe der Erfindung, eine Recheneinheit für eine programmierbare Logikeinheit anzugeben, die eine schnelle Multiplikation ohne die oben beschriebenen Nachteile ermöglicht.

Die Erfindung geht von der Erkenntnis aus, daß für die vorgesehene Anwendung der Recheneinheit als Multiplizierer, insbesondere bei der Realisierung von digitalen Filtern, unter bestimmten Voraussetzungen Vereinfachungen möglich sind. Werden nämlich nur solche Zahlen für die Filterkoeffizienten zugelassen, die sich relativ einfach als einfacher Zweierpotenzwert oder als einfache Summe und/oder Differenz von Zweierpotenzwerten darstellen lassen, dann kann die Hardware-Struktur des Multiplizierers sehr vereinfacht werden. Einfache Darstellungen in Zweierpotenzform sind beispielsweise alle binär kodierten Dualzahlen, die nur eine, zwei oder drei Binärstellen beliebiger Ordnung aufweisen. Die Multiplikation kann dann lediglich durch ein bzw. zwei bzw. drei Stellenverschiebe- oder Stellenzuordnungsoperationen mit einer bzw. zwei bzw. drei Stellenschiebeeinrichtungen (=Barrel-Schieberegister) und anschließender stellenrichtiger Addition der stellenverschobenen Bits ersetzt werden. Dabei müssen für den Schiebevorgang nicht einmal alle Zwischenpositionen anwählbar sein. Treten beispielsweise niemals die Zweierpotenzen 2exp3 (=2³) und 2exp5 (=2⁵) bei der Zahlenauswahl auf, dann erübrigen sich die Schiebepositionen um drei und fünf Binärstellen. Die Erläuterung der Erfindung an Hand von binären Dualzahlen schließt die Verwendung anderer Zahlensysteme, beispielsweise auf der Basis von ternären Zahlen, selbstverständlich nicht aus; in die Erfindung sind beliebige Zahlensysteme mit eingeschlossen.

Damit die Beschränkung der zugelassenen Zahlenwerte oder Koeffizienten weniger störend ist, ist es von Vorteil, wenn außer positiven Zweierpotenzen auch negative Zweierpotenzen zugelassen sind, die der kanonischen Darstellungsweise von binär kodierten Dualzahlen entsprechen. Dies erfordert lediglich eine Negierung des Zahlenwertes vor der Addition der Schiebeergebnisse. Die Negierung kann dabei vor oder nach der Stellenschiebeeinrichtung erfolgen. Die Stellenverschiebung ist sowohl in Richtung größerer als auch kleinerer Wertigkeiten möglich. Eine Schieberichtung in Richtung kleinerer Wertigkeiten entspricht einer Division um einen Zweierpotenzwert bzw. der Multiplikation mit einer reziproken Zweierpotenz. Da die Stellenschiebeeinrichtungen nach der Erfindung in der Regel nur wenige Schiebepositionen realisieren müssen, werden statt üblichen Schieberegistern vorteilhafterweise logische Zuordnungsschaltungen verwendet, die über ein Schalternetzwerk die Stellen des zu multiplizierenden Datenwortes mit den neuen Stellenpositionen verbinden. Schaltbefehle, die als Steuersignale oder Instruktionen in Abhängigkeit von einem Steuerwort gebildet werden, steuern die verschiedenen Zuordnungsschalter. Dieses Verfahren ist wesentlich schneller als die Verwendung eines normalen Schieberegisters, das alle Zwischenpositionen durchlaufen muß. Ein weiterer Vorteil derartiger Zuordnungsschaltungen ist der relativ geringe Flächenbedarf bei der monolithischen Integration, denn die Speicher, die für die Zwischenpositionen beim Schieberegister erforderlich sind, entfallen.

Die Beschränkung des Zahlenbereiches für die Koeffizienten und damit die Reduktion der erforderlichen Stellenverschiebevorgänge wird nun an einigen Beispielen aufgezeigt. Die Zahl 4 ist als Dualzahl mit einer einzigen Wertigkeit 2² definiert, erfordert also nur eine einzige binäre Stelle, nämlich 2². Die anderen Wertigkeiten 2¹ und 2⁰ haben den Wert Null. Dies entspricht einem einzigen Schiebevorgang der zu multiplizierenden Zahl um zwei Stellen. Ein Gegenbeispiel ist die Zahl 15, die als übliche Dualzahl 4 Binärstellen erfordert und als "1111" dargestellt wird, nämlich 2³+2²+2¹+2⁰. Dies erfordert vier unabhängige Schiebevorgänge der zu multiplizierenden Zahl mit anschließender Addition der gleichen Wertigkeiten. In kanonischer Schreibweise erfordert die Zahl 15 jedoch nur zwei Binärstellen, nämlich 2⁴- 2⁰. Dies sind nur noch zwei Schiebevorgänge, einer um 4 Stellen und ein zweiter um 0 Stellen, wobei der letzere Wert durch das negative Vorzeichen vom ersten Schiebeergebnis abgezogen wird. Ein weiteres Zahlenbeispiel, das dem üblichen Wertebereich von 0 bis 1 oder von -1 bis +1 in Signalprozessoren entspricht, ist der Wert 0.234375 = 2⁻² - 2⁻⁶. Die Multiplikation dieses Zahlenwertes mit der Zahl "a" hat dann die einfache Lösung a·2⁻² - a·2⁻⁶, also wieder zwei Schiebevorgänge um 2 und um 6 Stellen in Richtung kleinerer Wertigkeiten, dann die Negierung des einen Wertes und anschließend werden die Ergebnisse beider Schiebevorgänge addiert.

Die resultierende Summe stellt das Multiplikationsergebnis dar, das in einem Register gespeichert wird. Über eine Signalrückführung des Registerinhaltes auf den Addierer kann eine Akkumulierung durchgeführt werden, die bei Filteranwendungen oft nötig ist. Selbstverständlich ist die multiplizierende Eigenschaft derartiger Recheneinrichtungen nicht nur für Filter, sondern auch für andere Anwendungen mit Vorteil verwendbar, beispielsweise zur linearen Verstärkung oder Absenkung von Signalen, wenn eine einfache Stellenverschiebung zu grob ist.

Alle Werte, die sich so auf diese relativ einfache Weise darstellen lassen, bilden einen Zahlenvorrat für die möglichen Koeffizienten. Für die jeweilige Anwendung sind nun die geeigneten Koeffizienten über eine Simulation und Optimierung herauszufinden. Der Aufwand hierfür spielt keine Rolle, denn wenn die Koeffizienten einmal festliegen, dann brauchen diese Werte nicht mehr geändert zu werden und können in einem Speicher abgelegt werden. Ob es sich dabei um Filterkoeffizienten oder andere Werte handelt, ist für die Erfindung nicht von Bedeutung. Ob die einzelnen Funktionsabläufe wie Stellenverschiebung, Negierung und Addition innerhalb einer einzigen Taktperiode als abschließende Funktionsabläufe oder zeitlich gestaffelt im Pipeliningverfahren über mindestens zwei Taktperioden erfolgen, ist von untergeordneter Bedeutung. Es muß nur sichergestellt sein, daß alle erforderlichen Befehle immer rechtzeitig zur Verfügung stehen. In der Regel sind somit die erforderlichen Befehle oder Instruktionen in einem einzigen Befehlswort kodiert.

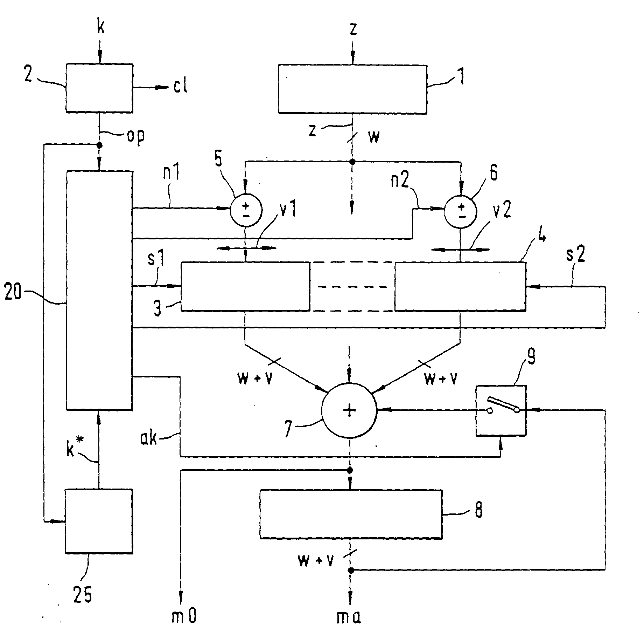

Die Erfindung und vorteilhafte Anwendungen werden nun anhand der Figur der Zeichnung näher erläutert:

Die Figur zeigt als Blockschaltbild schematisch eine Recheneinheit nach der Erfindung.

In der einzigen Figur ist als Ausführungsbeispiel das Blockschaltbild einer Recheneinheit nach der Erfindung dargestellt. Eine zu multiplizierende erste Zahl z, die beispielsweise voher durch Digitalisierung eines Signalwertes in einem nicht dargestellten Analog-Digital-Umsetzer gebildet wurde und jetzt in einem Register 1 mit w Binärstellen steht, soll mit einer zweiten Zahl k aus einer anderen Datenquelle 2 oder Speichereinrichtung 25 multipliziert werden. Die zweite Datenquelle 2 ist beispielsweise Teil eines monolithisch integrierten Prozessors. Ein Systemtakt cl entstammt ebenfalls der zweiten Quelle 2 oder einem nicht dargestellten Taktgenerator. In der Speichereinrichtung 25, die mit der Datenquelle 2 und einer Steuereinrichtung 20 verkoppelt ist, können die zuvor eingelesenen oder gespeicherten Zahlen k in irgend einer aufbereiteten Form k^{*} gespeichert und durch ein Steuerwort op aus der Datenquelle 2 oder Steuereinrichtung 20 abrufbar sein. Bei den eigentlichen Zahlen k handelt es sich nicht um fein aufgeteilte Zahlenwerte wie bei den Signalwerten, die innerhalb des vorgegebenen Wertebereichs und der Auflösung jeden beliebigen Zwischenwert annehmen können, sondern um fest vorgegebene Zahlenwerte mit einer ganz kleinen Anzahl von Binärstellen. Wie bereits erwähnt, handelt es sich bei den zweiten Zahlen k um eine enge Auswahl von binär kodierten Dualzahlen, vorteilhafterweise auch in kanonischer Form.

Die zu realisierenden Rechenabläufe in der Recheneinheit, beispielsweise zur Bildung eines digitalen Filters, sind über Steuerworte op aus der zweiten Quelle 2 gesteuert. Das Steuerwort op erzeugt dabei mittels der Steuereinrichtung 20 und der gespeicherten zweiten Zahl k^{*} in der Speichereinrichtung 25 innerhalb einer einzigen Taktperiode sämtliche parallel erforderlichen Steuersignale oder Instruktionen n1, n2, s1, s2, ak für die einzelnen Funktionseinheiten, damit diese das Multiplikationsergebnis m0 aus der ersten und zweiten Zahl z, k innerhalb dieser einen Taktperiode bilden können. Die wesentlichen Funktionseinheiten sind dabei Stellenschiebeeinrichtungen 3, 4, Vorzeicheninverter 5, 6 und ein vielstelliger Addierer 7 mit einem schaltbaren Akkumulierungspfad. Das dargestellte Ausführungsbeispiel enthält eine erste und zweite Stellenschiebeeinrichtung 3, 4. Wenn eine feinere Auflösung zu realisieren ist, dann sind weitere Stellenschiebeeinrichtungen vorzusehen, die im Ausführungsbeispiel durch gestrichelte Linien angedeutet sind.

Vor der ersten bzw. zweiten Stellenschiebeeinrichtung 3, 4 befindet sich im jeweiligen Datenpfad ein erster bzw. zweiter Vorzeicheninverter 5, 6 und danach der gemeinsame Addierer 7, der die einzelnen Ausgänge der Stellenschiebeeinrichtungen 3, 4 stellenrichtig addiert und als aktuellen Multiplikationswert m0 an seinen w+v Ausgängen abgibt.

Aus dem vorgegebenen Vorrat und Format der Zahlen k, k^{*} ergibt sich, wieviele Schiebepositionen die Stellenschiebeeinrichtungen 3, 4 jeweils aufweisen müssen. Ferner ergibt sich die zugehörige maximale Schiebedistanz v1, v2 und die Schieberichtung. Aus der maximalen Schiebedistanz v für alle Stellenschiebeeinrichtungen 3, 4 und der maximalen Stellenanzahl w der ersten Zahl z, ergibt sich im wesentlichen die Stellenanzahl w+v des Addierers 7 und eines nachgeschalteten Akkumulatorspeichers 8, an dessen Ausgang ein akkumulierter Multiplikationswert ma abgreifbar ist. Die erforderliche Rückführung des Akkumulatorinhaltes zum Addierer 7 erfolgt über den bereits genannten Akkumulierungspfad, dessen Schaltzustand von einer Akkumulierungsinstruktion ak gesteuert ist, die Schalter 9 öffnet oder schließt.

Die Negierung der ersten Zahl z über die Vorzeicheninstruktionen n1, n2 erfolgt für diejenigen Zahlen k, k^{*} die in der kanonischen Darstellung eine Binärstelle mit negativem Wert enthalten - beispielsweise die Zahl k = 28 in der kanonischen Form k = 2⁵ - 2². Die der zweiten Stellenschiebeeinrichrichtung 4 zugeführte Zahl k wird demnach invertiert und um zwei Stellen in MSB-Richtung (=Most Significant Bit) verschoben. Für die erste Stellenschiebeeinrichtung 3 findet keine Invertierung statt, die Verschiebung in MSB-Richtung beträgt hier 5 Stellen. Diese Informationen werden als parallele Steuersignale oder Instruktionen n1, n2, s1, s2 von dem taktweise zugehenden Steuerwort op ausgelöst.

Wenn für eine Zahl k aus dem vorhandenen Zahlenvorrat nicht alle Stellenschiebeeinrichtungen s1, s2 benötigt werden, beispielsweise weil die Zahl k einer glatten Zweierpotenz 2ⁿ entspricht, dann ist nur eine einzige Stellenschiebeeinrichtung s1 oder s2 erforderlich und die anderen dürfen keinen Beitrag liefern. Diese Nullsetzung oder Nullposition wird innerhalb der Schiebeinstruktion s1, s2 durch einen eigenen Zahlenwert oder eine eigene Bitfolge kodiert. Wenn beispielsweise die Schiebeinstruktion s1 oder s2 für eine Stellenschiebeeinrichtung 3 bzw. 4 zwei Binärstellen umfaßt, dann können entweder vier unterschiedliche Schiebepositionen programmiert werden oder drei unterschiedliche Schiebepositionen und eine Nullposition, beispielsweise die vier Schiebepositionen um 5, 3, 0 oder -2 Stellen oder die drei Schiebepositionen um 5, 3 oder 1 Stelle, dafür aber auch noch die Nullposition.

Der vielstellige Addierer 7 kann sehr unterschiedlich ausgebildet sein, beispielsweise eine Baumstruktur nach Wallace, um auch den akkumulierten Wert ma innerhalb einer einzigen Taktperiode bilden zu können. Weniger aufwendige Addiererstrukturen benötigen dafür zwei oder mehr Taktperioden. Wenn in jeder Taktperiode ein Multiplikationsergebnis m0, ma vorliegen soll, zwischen Ein- und Ausgang jedoch einige Taktperioden gleichsam als Laufzeit zulässig sind, dann bietet sich für den Addierer auch das bereits erwähnte Pipeline-Verfahren an.

## Patentansprüche

1. Recheneinheit für eine erste (z) und zweite (k, k^{*}) Zahl mit
- mindestens einer Stellenschiebeeinrichtung (3, 4), deren Schiebeposition mittels einer zugehörigen Schiebeinstruktion (s1, s2) in Abhängigkeit von der zweiten Zahl (k, k^{*}) gesteuert ist und deren Stelleneingängen die nach Wertigkeiten geordneten Stellen der ersten Zahl (z), die in der Regel eine binär kodierte Dualzahl ist, zugeführt sind,
- jeder Stellenschiebeeinrichtung (s1, s2) ist ein- oder ausgangseitig ein Vorzeicheninverter (5, 6) zugeordnet, der in Abhängigkeit von der zweiten Zahl (k,k^{*}), die in der Regel eine binär kodierte Dualzahl unter Einbeziehung der kanonischen Form ist, mittels einer zugehörigen Vorzeicheninstruktion (n1, n2) gesteuert ist,
- jede Stelle der Stellenschiebeeinrichtung (3, 4) ist ausgangsseitig mit jeweils einem Stelleneingang eines vielstelligen Addierers (7) verbunden, und
- die Funktionsabläufe wie Stellenverschiebung, Negierung und Addition erfolgen als abschließende Funktionsabläufe innerhalb einer einzigen Taktperiode oder zeitlich gestaffelt im Pipeliningverfahren über mindestens zwei Taktperioden.

2. Recheneinheit nach Anspruch 1, dadurch gekennzeichnet, daß die Anzahl der unabhängig voneinander steuerbaren Stellenschiebeeinrichtungen (3, 4) von der Auswahl der zweiten Zahl (k, k^{*}) abhängig ist, nämlich von der durch die Auswahl vorgegebene maximale Stellenanzahl der zweiten Zahl (k, k^{*}), wobei die Stellen mit der Wertigkeit Null nicht in die zu berücksichtigende Stellenanzahl mit eingehen.

3. Recheneinheit nach Anspruch 1 oder 2, dadurch gekennzeichnet, daß in der Schiebeinstruktion (s1, s2) für die jeweilige Stellenschiebeeinrichtung (3, 4) auch eine Schiebeposition definiert ist, bei der die Ausgänge für den nachfolgenden Addierer (7) gesperrt oder auf einen Nullwert gesetzt sind.

4. Recheneinheit nach einem der Ansprüche 1 bis 3, dadurch gekennzeichnet, daß die Ausgangsstellen des Addierers (7) mit den Eingängen eines Akkumulierungsspeichers (8) verkoppelt sind.

5. Recheneinheit nach Anspruch 4, dadurch gekennzeichnet, daß eine Akkumulierungsinstruktion (ak) einen Datenpfad aktiviert, der die Stellenausgänge des Akkumulierungsspeichers (8) stellenrichtig auf Addiereingänge des Addierers (7) zurückkoppelt.

6. Recheneinheit nach einem der Ansprüche 1 bis 5, dadurch gekennzeichnet, daß die erste (z) und zweite Zahl (k, k^{*}) binär kodierte Dualzahlen sind und daß die Multiplikation der ersten und zweiten Zahl (z bzw. k, k^{*}) durch aufeinanderfolgende Schiebevorgänge einer einzigen Stellenschiebeeinrichtung (3) erfolgt, wobei die jeweiligen Schiebepositionen in Abhängigkeit von den Wertigkeiten der zugehörigen Binärstellen der zweiten Zahl (k, k^{*}) mittels aufeinanderfolgender Schiebeinstruktionen (s1) bestimmt sind.

7. Recheneinheit nach Anspruch 6, dadurch gekennzeichnet, daß bei zwei und mehr vorhandenen Stellenschiebeeinrichtungen (3, 4) die aufeinanderfolgenden Schiebevorgänge gruppenweise erfolgen, indem jeder Stellenschiebeeinrichtung (3, 4) je eine Binärstelle der zweiten Zahl (k, k^{*}) zugeordnet ist, wobei die zugehörigen Binärstellen der zweiten Zahl durch aufeinanderfolgende Schiebeinstruktionen (s1, s2) bestimmt sind.
